# EUROPÄISCHE PATENTSCHRIFT

(11) **EP 0 838 666 B1**
(45) Veröffentlichungstag und Bekanntmachung des Hinweises auf die Patenterteilung: **11.06.2003**
(21) Anmeldenummer: 97117272.1
(22) Anmeldetag: 06.10.1997
(51) Int. Cl.: G01D 11/24

(54) **Messgerät**
Measuring device
Dispositif de mesure

(30) Priorität: 23.10.1996 DE 19643751
(43) Veröffentlichungstag der Anmeldung: 29.04.1998
(73) Patentinhaber: Endress + Hauser GmbH + Co.KG., 79689 Maulburg (DE)
(72) Erfinder: Oberle, Klaus-Peter, 79809 Weilheim (DE); Mornhinweg, Markus, 79194 Gundelfingen (DE)

(56) Entgegenhaltungen:
- DE-A- 4 118 793
- DE-A- 4 213 857
- DE-A- 4 233 315

## Beschreibung

Die Erfindung betrifft ein Meßgerät
- mit einem zylindrischen Stutzen,
- mit einer mindestens einen Abschnitt des Stutzens umgreifenden Muffe, die an einem Meßort zu befestigen ist,
- mit einer Einspannvorrichtung, durch die der Stutzen in der Muffe befestigt ist,
- mit einer ringförmigen Dichtung,
   - - die in der Muffe angeordnet ist und
   - - die am Stutzen dichtend anliegt, und
- mit einem in der Muffe lösbar befestigten Druckring,
   -- der in einer Endlage die Dichtung in axialer Richtung unter Druck setzt.

Derartige Meßgeräte sind im Handel erhältlich. Der zylindrische Stutzen ist an einem Meßort, z.B. in einer Öffnung auf einem Tank oder Behälter, befestigt. Beispiele sind Meßsonden, insb. kapazitive Füllstandssonden und Vibrationsgrenzschalter. Bei vielen Anwendungen, z.B. in der Chemie oder in der Lebensmittelindustrie, stehen die Behälter unter Druck.

Typischerweise ist der Stutzen in eine rohrförmige Muffe eingesteckt, die z.B. mittels eines daran angeformten Gewindes am Meßort angeschraubt ist. Die Abdichtung des Behälter-Innenraums gegenüber der Umgebung erfolgt durch die Dichtung. Üblicherweise liegt diese auf einer Absatzfläche in der Muffe auf und der Druckring ist in die Muffe einzuschrauben. Im eingeschraubten Zustand befindet sich der Druckring in einer Endlage, in der er mit einer ringförmigen Stirnfläche gegen die Dichtung preßt. Durch diese Einspannung zwischen Absatzfläche und Ringfläche entfaltet die Dichtung deren Wirkung.

Die Einspannvorrichtung besteht üblicherweise aus Fixierschrauben, die durch an der dichtungs-abgewandten Seite angeordnete, den Druckring durchdringende und senkrecht zu dessen Längsachse verlaufende, durchgehende Bohrungen hindurch gegen den Stutzen zu schrauben sind.

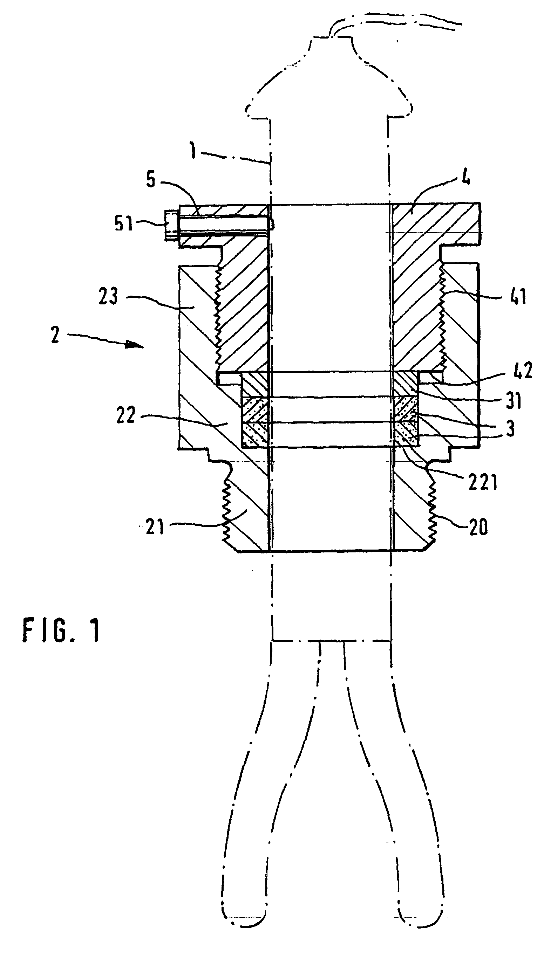

Ein Beispiel dieses Standes der Technik ist in Figur 1 dargestellt und nachfolgend näher erläutert.

Ein Nachteil dieser Meßgeräte besteht darin, daß durch die Fixerschrauben eine punktuelle Einspannung des Stutzen vorliegt. Der Stutzen kann durch diese lokalisierte Belastung beschädigt, z.B. eingedrückt werden. Bei Mehrfachverwendung des Meßgeräts besteht die Gefahr, daß die beschädigte Stelle an die Dichtung angrenzt und die Dichtqualität beeinträchtigt.

Beim Entfernen des Meßgeräts ist zuerst die Einspannung des Stutzen in der Muffe und erst danach die Einspannung der Dichtung zu lösen. Nach dem Lösen der Einspannung ist der Stutzen in der Muffe beweglich. Es ist daher selbstverständlich, daß die Einspannung dann und nur dann gelöst werden darf, wenn der am Meßort herrschende Druck gleich dem Umgebungsdruck ist. Das Meßgerät könnte andernfalls durch einen am Meßort herrschenden Überdruck aus der Muffe herausgedrückt, bzw. durch einen am Meßort herrschenden Unterdruck in den Behälter hineingesaugt werden. Aus dem Behälter ist das Meßgerät unter Umständen nur unter Schwierigkeiten zu bergen.

Ein weiterer Nachteil besteht darin, daß beim Anbringen des Meßgeräts zuerst die Einspannung der Dichtung und erst danach die Befestigung des Stutzen in der Muffe erfolgt.

Ein weiterer Nachteil besteht darin, daß bei der Montage zwei Arbeitsgänge erforderlich sind, einer zur Einspannung der Dichtung und ein weiterer zur Befestigung des Stutzens. Dies gilt analog für die Demontage des Meßgeräts.

Es ist eine Aufgabe der Erfindung, ein Meßgerät anzugeben, bei dem Montage und Demontage am Meßort in einem Arbeitsgang erfolgen. Ferner soll bei der Montage die Befestigung vor oder gleichzeitig mit der Einspannung der Dichtung erfolgen und bei der Demontage soll zuerst die Dichtung und dann die Befestigung gelöst werden. Auch soll der Anwender bei der Demontage automatisch eine Warnung erhalten, wenn der am Meßort herrschende Druck vom Umgebungsdruck verschieden ist.

Dies alles erreicht die Erfindung dadurch, daß die Einspannvorrichtung als Klemmvorrichtung ausgebildet ist, die aus einem Klemmzustand nur durch Einwirkung einer äußeren Kraft zu lösen ist, und daß der Klemmzustand durch die Endlage des Druckrings bewirkt ist.

Gemäß einer Weiterbildung der Erfindung wirkt
beim Lösen des Druckrings ein am Meßort herrschender Überdruck auf die Klemmvorrichtung ein und verschiebt diese in axialer Richtung, bis diese in einer ersten Rastvorrichtung einrastet. Die Einspannvorrichtung ist im eingerasteten Zustand fest oder über eine zweite Rastvorrichtung mit dem Druckring verbunden, so daß der Druckring in dessen Lage fixiert ist und nicht vollständig von der Muffe lösbar ist.

Gemäß einer Ausgestaltung weist die Klemmvorrichtung einen Klemmkonus mit einer durchgehenden axialen Bohrung und einem durchgehenden in axialer Richtung verlaufenden Spalt, und ein Fixierelement mit einer inneren konischen Mantelfläche auf und das Fixierelement ist durch den Druckring auf den Klemmkonus gepreßt.

Gemäß einer Ausgestaltung der Erfindung sind das Fixierelement und der Druckring ein einziges einteiliges Montageelement.

Gemäß einer weiteren Ausgestaltung liegt der Klemmkonus mit einer fixierelement-abgewandten Grundfläche auf der Dichtung oder auf einem auf der Dichtung aufliegenden Distanzring und die Dichtung liegt auf einer in der Muffe angeordneten Absatzfläche.

Gemäß einer weiteren Ausgestaltung ist ein Sprengring in einer auf der dichtung-abgewandten Seite des Klemmkonus in einer in der Muffe angeordneten ringförmigen Nut eingebracht.

Gemäß einer weiteren Ausgestaltung sind die Neigungswinkel der Koni von Klemmkonus und Fixierelement jeweils spitze Winkel sind, die insb. 8° nicht übersteigen.

Gemäß einer weiteren Ausgestaltung liegt der Druckring mit einer Ringfläche eines sich radial nach innen erstreckenden Absatzrings auf einem Absatz des Fixierelements auf.

Gemäß einer weiteren Ausgestaltung ist der Druckring nur durch mindestens eine Drehung um dessen Längsachse von der Muffe trennbar. Der Druckring kann in die Muffe eingeschraubt sein.

Gemäß einer Weiterbildung der Erfindung ist der Druckring mittels mindestens einer parallel zur Längsachse des Druckrings angeordneten Schraube auf der Muffe befestigt, und in dem Druckring ist mindestens ein Bohrungspaar angeordnet, das eine erste Bohrung und eine zweite Bohrung aufweist, wobei die erste Bohrung einen Innendurchmesser hat, der kleiner als der größte Schraubendurchmesser ist, wobei die zweite Bohrung einen Innendurchmesser hat, der größer als der größte Schraubendurchmesser ist, und wobei die erste Bohrung und die zweite Bohrung durch einen Kanal miteinander verbunden sind, dessen Breite geringer als der größte Schraubendurchmesser ist.

Gemäß einer Ausgestaltung der letztgenannten Weiterbildung weist die erste Bohrung an deren muffen-abgewandtem Ende jeweils einen Abschnitt auf, in dem ein druckring-zugewandter Abschnitt eines Schraubenkopfs der Schrauben versenkt ist und die Schrauben sind nicht vollständig aus der Muffe herausschraubbar.

Gemäß einer Weiterbildung der Erfindung ist eine erste Rastvorrichtung vorgesehen, durch die ein Anheben des Fixierelements in der Muffe und/oder ein Herausheben des Fixierelements aus der Muffe in dichtungs-abgewandter Richtung nur in mindestens einer bestimmten, durch Drehung des Fixierelements um dessen Längsachse herbeizuführenden Lage möglich ist.

Gemäß einer ersten Ausgestaltung der letztgenannten Weiterbildung ist die erste Rastvorrichtung durch mindestens einen in der Muffe angeordneten Rastzapfen und eine an dem Fixierelement angeformte umlaufende Schulter gebildet und die Schulter weist mindestens eine Aussparung auf.

Gemäß einer zweiten Ausgestaltung der letztgenannten Weiterbildung ist die erste Rastvorrichtung durch mindestens einen in der Muffe angeordneten Rastzapfen und mindestens eine in dem Fixierelement angeordnete Führungsnut gebildet. Der Rastzapfen ist bei der Montage in die Führungsnut einzuschieben. Dabei erfährt das Fixierelement eine Drehung um dessen Längsachse.

Gemäß einer weiteren Ausgestaltung dieser zweiten Ausgestaltung weist die Führungsnut mindestens eine Sackbohrung auf, die parallel zur Längsachse des Fixierelements verläuft.

Gemäß einer Weiterbildung der Erfindung wirkt ein am Meßort herrschender Druck beim Lösen des Druckrings auf das Fixierelement ein und verschiebt dieses in axialer Richtung, bis das Fixierelement in einer ersten Rastvorrichtung einrastet.

Gemäß einer Weiterbildung der letztgenannten Weiterbildung ist das Fixierelement im eingerasteten Zustand nicht drehbar und mit dem Druckring fest oder über eine zweite Rastvorrichtung verbunden, so daß eine Drehung des Druckrings nur mit einer Drehung des Fixierelements möglich ist, und der Druckring ist nur durch die Drehung von der Muffe lösbar.

Gemäß einer Ausgestaltung der letztgenannten Weiterbildung weist die zweite Rastvorrichtung mindestens eine, insb. eine durch axiale Krafteinwirkung versenkbare, auf einer fixierelement-zugewandten Ringfläche des Druckrings angeordnete Rastnase und eine entsprechende Anzahl von im Fixierelement an dessen druckring-zugewandtem Ende angeordneten Rastkerben auf.

Gemäß einer weiteren Ausgestaltung der letztgenannten Weiterbildung weisen die Rastkerben jeweils als eine erste Begrenzung eine Stufe und als eine zweite Begrenzung eine Rampe auf, wobei die Rampe jeweils auf der Seite der Rastkerbe angeordnet ist, über die sich eine über der Rastkerbe befindliche Rastnase beim Einschrauben des Druckrings zuerst hinwegbewegt.

Ein Vorteil der Erfindung besteht darin, daß die Dichtung beim Öffnen der Befestigung des Stutzens automatisch undicht wird. Ein Druckausgleich zwischen Meßort und Umgebung kann somit einsetzen und führt zu einem Pfeifen.

Der Anwender ist also vor dem Druckunterschied gewarnt und kann entsprechend sicherheitsgerichtet reagieren.

Die Erfindung und weitere Vorteile werden nun anhand der Figuren der Zeichnung, in denen ein dem Stand der Technik zugehöriges Meßgerät und drei Ausführungsbeispiele erfindungsgemäßer Meßgeräte dargestellt sind, näher erläutert; gleiche Teile sind in den Figuren mit gleichen Bezugszeichen versehen.
- Fig. 1 zeigt: im Längsschnitt ein dem Stand der Technik zugehöriges Meßgerät;
- Fig. 2a zeigt: einen Längsschnitt eines ersten Ausführungsbeispiels eines erfindungsgemäßen Meßgeräts;
- Fig. 2b zeigt: eine Draufsicht auf den Klemmkonus von Fig. 2a;
- Fig. 3a zeigt: einen Längsschnitt eines zweiten Ausführungsbeispiels eines erfindungsgemäßen Meßgeräts;
- Fig. 3b zeigt: eine perspektivische Ansicht des Fixierelements von Fig. 3a;
- Fig. 3c zeigt: eine Draufsicht auf die muffen-zugewandte Seite des Druckrings von Fig. 3a;
- Fig. 4a zeigt: einen Längsschnitt eines dritten Ausführungsbeispiels eines erfindungsgemäßen Meßgeräts;
- Fig. 4b zeigt: eine Draufsicht auf die muffen -abgewandte Seite des Montageelements von Fig. 4a; und
- Fig. 4c zeigt: eine perspektivische Ansicht des Montageelements von Fig. 4a.

In Fig. 1 ist im Längsschnitt ein Meßgerät dargestellt, das dem Stand der Technik entspricht, auf dem die Erfindung aufbaut.

Das Meßgerät weist einen zylindrischen Stutzen 1 auf, der in einer Muffe 2 angeordnet ist. Sie umgreift einen Abschnitt des Stutzens 1. Die Muffe 2 ist mit einem Außengewinde 20 an einem Meßort zu befestigen.

Sie weist einen ersten Abschnitt 21 auf, dessen Innendurchmesser gleich dem Außendurchmesser des Stutzens 1 ist. Daran grenzt ein zweiter Abschnitt 22 an, der einen größeren Innendurchmesser aufweist als der erste. An diesen schließt ein dritter Abschnitt 23 an, dessen Innendurchmesser wiederum größer als der Innendurchmesser des zweiten Abschnitts 22 ist. Zwischen dem ersten Abschnitt 21 und dem zweiten Abschnitt 22 besteht eine Absatzfläche 221, auf der eine ringförmige Dichtung 3 liegt. Sie liegt außerdem mit einer zylindrischen Mantelfläche an der Innenwand der Muffe 2 an. Die Dichtung 3 ist z.B. ein Ring aus Graphit oder aus einem Elastomer. Auf der Dichtung 3 liegt ein Distanzring 31, z.B. aus Metall.

Es ist ein Druckring 4 vorgesehen, der einen Abschnitt des Stutzens 1 umgreift und mit einem Außengewinde 41 in den Abschnitt 23 der Muffe 2 eingeschraubt ist. Die Innendurchmesser von Druckring 4 und Distanzring 31 sind gleich dem Außendurchmesser des Stutzens 1. Der Druckring 4 drückt in einer Endlage, d.h. im eingeschraubten Zustand, mit einer dichtung-zugewandten Stirnfläche 42 gegen den Distanzring 31, durch den wiederum die Dichtung 3 gepreßt ist. Sie ist zwischen der Absatzfläche 221 und der Stirnfläche 42 des Druckrings 4 in axialer Richtung eingespannt und liegt dichtend an dem Stutzen 1 an. Der Distanzring 31 bewirkt, daß nur in axialer Richtung Kräfte auf die Dichtung 3 einwirken. Würde der Druckring 4 direkt auf die Dichtung 3 montiert, so könnte diese durch die Drehbewegung des Druckrings 4 verdrehen oder aufgeworfen werden. Zum Einschrauben des Druckrings 4 in die Muffe 2 weisen sowohl der Druckring 4 als auch Muffe 2 z.B. die Außengeometrie eines Sechskants auf.

Die Befestigung des Stutzens 1 in der Muffe 2 erfolgt durch mindestens eine Fixierschraube 5. Diese ist durch eine im Druckring 4 angeordnete durchgehende Bohrung 5 hindurch gegen den Stutzen 1 geschraubt. Die Bohrung 5 befindet sich an der dichtungs-abgewandten Seite des Druckrings 4 und verläuft senkrecht zu dessen Längsachse.

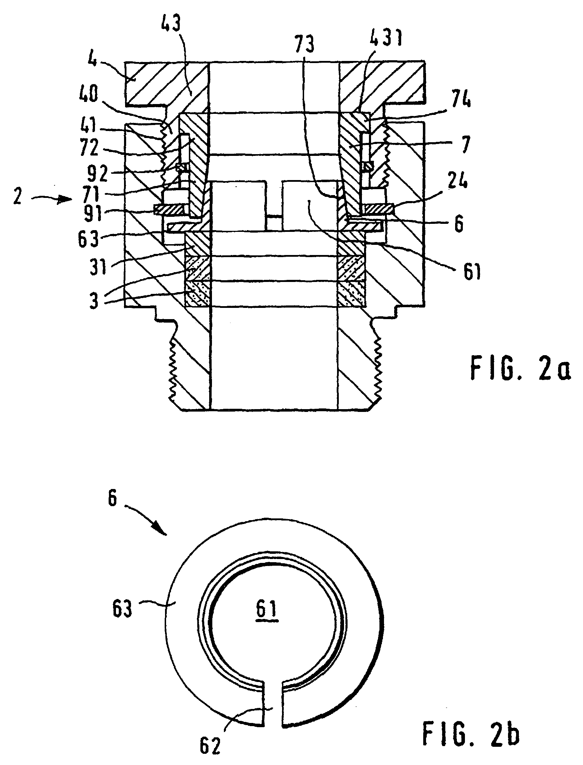

In Fig. 2a ist im Längsschnitt ein erstes Ausführungsbeispiel eines erfindungsgemäßen Meßgeräts dargestellt. Die Muffe 2 und die Anordnung der Dichtung 3 und des Distanzrings 31 darin stimmen mit dem in Fig. 1 Dargestellten überein und werden daher hier nicht näher erläutert. Der Stutzen 1 ist der besseren Übersicht halber in Fig. 2a nicht dargestellt. Er kann identisch von Fig. 1 übernommen werden.

Auf dem Distanzring 31 ist ein Klemmkonus 6 angeordnet. Dieser ist außen konisch und weist eine durchgehende axiale Bohrung 61 auf, deren Innendurchmesser gleich dem Außendurchmesser des Stutzens 1 ist.

Fig. 2b zeigt eine Draufsicht auf den Klemmkonus 6. Es ist ein durchgehender, in axialer Richtung durch den Klemmkonus 6 verlaufender Spalt 62 vorgesehen, so daß der Klemmkonus 6 zusammendrückbar ist. In der Draufsicht hat der Klemmkonus 6 die Form eines überstumpfwinkligen Kreisringsegments. An dem dichtungs-zugewandten Ende des Klemmkonus 6 ist eine sich radial nach außen erstreckende Ringscheibe 63 angeformt. Der Klemmkonus 6 liegt mit einer konusabgewandten Grundfläche der Ringscheibe 63 auf dem Distanzring 31 auf. Der Distanzring 31 ist nicht zwingend erforderlich. Es ist auch möglich, daß der Klemmkonus 6 mit der Ringscheibe 63 direkt auf der Dichtung 3 liegt. Der Außendurchmesser des Klemmkonus 6 nimmt in dichtungs-abgewandter Richtung ab.

Auf den Klemmkonus 6 ist ein Fixierelement 7 aufgesteckt. Dieses ist ein im wesentlichen rohrförmiges Element, das einen klemmkonus-zugewandten Abschnitt 71 mit einem konusförmigen Innenvolumen und einen klemmkonus-abgewandten rohrförmigen Abschnitt 72 aufweist. Der Innendurchmesser des Abschnitts 72 ist gleich dem Außendurchmesser des Stutzens 1. Der Innendurchmesser des Abschnitts 71 nimmt in klemmkonus-zugewandter Richtung zu und ist in seiner Form der Geometrie des Klemmkonus 6 angepaßt. Das Fixierelement 7 liegt folglich mit einer inneren konischen Mantelfläche 73 paßgenau auf dem Klemmkonus 6 auf.

Die Neigungswinkel der Koni von Klemmkonus 6 und Fixierelement 7 sind jeweils spitze Winkel und vorzugsweise kleiner als 8°. Werden Klemmkonus 6 und Fixierelement 7 durch eine Krafteinwirkung aufeinander gespannt, so lösen sie sich nach Wegfall der Krafteinwirkung nicht von alleine voneinander. Es ist ein erneuter, wenn auch geringerer Kraftaufwand erforderlich, um die beiden Bauteile voneinander zu lösen. Dieser durch den Neigungswinkel bedingte Effekt wird auch als Selbsthemmung bezeichnet.

An das klemmkonus-abgewandte Ende Fixierelement 7 ist außen ein Absatzring 74 angeformt.

Es ist ein Druckring 4 vorgesehen, der in die Muffe 2 eingeschraubt ist. Er besteht aus einem Rohr 40 mit einem Außengewinde 41. Das Rohr 40 umschließt einen dichtungs-abgewandten Abschnitt des Fixierelements 7. Auf der fixierelement-abgewandten Seite ist an das Rohr 40 ein sich radial nach innen erstreckender Absatzring 43 angeformt. Der Druckring 4 liegt mit einer in den Muffen-Innenraum weisenden Ringfläche 431 des Absatzrings 43 auf dem Absatzring 74 des Fixierelements 7 auf.

In der Muffe 2 ist eine umlaufende Nut 24 angeordnet, in die ein Sprengring 91 eingebracht ist. Die Nut 24 befindet sich in der Muffe 2 auf der dichtungs-abgewandten Seite des Klemmkonus 6. Ein Sprengring ist ein überstumpfwinkliges Kreisringsegment, dessen Abmessungen derart gewählt sind, daß es nur durch zusammendrücken in die Nut 24 eingebracht werden kann. Der Innendurchmesser des Sprengrings 91 ist geringer als der Außendurchmesser der Ringscheibe 63. Der Sprengring 91 verhindert ein Herausnehmen oder Herausfallen des Klemmkonus 6 aus der Muffe 2.

Auf analoge Weise ist das Fixierelement 7 im Druckring 4 befestigt. Hierzu ist eine im Druckring 4 umlaufende Nut vorgesehen, in der ein Sprengring 92 eingespannt ist.

Beim Einschrauben des Druckrings 4 drückt dieser auf das Fixierelement 7, so daß dieses wiederum auf den Klemmkonus 6 gespannt wird. Der Klemmkonus 6 wird dabei sowohl zusammmengedrückt, so daß der Spalt 62 abnimmt, als auch auf den Distanzring 31 gedrückt. Der Druck auf den Distanzring 31 überträgt sich auf die Dichtung 3. Diese wird in axialer Richtung gepreßt, dehnt sich folglich in radialer Richtung aus und wird somit durch das Einschrauben des Druckrings 4 bis in eine Endlage in der Muffe 2 wirksam.

Die Befestigung des Stutzens 2 in der Muffe 2 erfolgt, indem der Klemmkonus 6 zusammengedrückt und somit gegen den Stutzen 1 gepreßt wird. Der Stutzen 1 ist hierdurch in dem Klemmkonus 6 eingespannt. Klemmkonus 6 und Fixierelement 7 stellen eine Klemmvorrichtung dar, die durch das Einschrauben des Druckrings 4 bis in dessen Endlage ihre Klemmwirkung entfaltet. Der dadurch bewirkte Klemmzustand kann nur durch Einwirkung einer äußeren Kraft gelöst werden.

Die Befestigung des Stutzens 1 in der Muffe 2 und das Einspannen der Dichtung 3 erfolgen in einem einzigen Arbeitsschritt. Eine Beschädigung des Stutzens 1 tritt durch diese den Klemmkonus 6, das Fixierelement 7 und den Druckring 4 umfassende Einspannungsvorrichtung praktisch nicht auf, da die Einspannkräfte auf einer fast vollständig um den Stutzen 1 herumlaufenden Linie allseitig gleichermaßen auf ihn einwirken. Sollte dennoch eine Verformung auftreten, so kann diese nur die Form einer umlaufenden gleichmäßigen Einkerbung aufweisen. Dies ist jedoch im Falle einer Mehrfachverwendung des Meßgeräts unkritisch, da eine solche Verformung nicht zu einer Beeinträchtigung der Dichtqualität führt.

Beim Lösen des Druckrings 4 bleibt die Einspannung des Stutzens 1 zunächst bestehen, da das Fixierelement 7 und der Klemmkonus 6 auch ohne die Einwirkung des Druckrings 4 in dem Klemmzustand verbleiben. Es ist eine zusätzliche Kraft nötig, um diese Verbindung zu lösen. Die Dichtung 3 verliert dagegen sofort ihre Wirkung, wenn der Druckring 4 gelöst wird. Sollte am Meßort ein vom Umgebungsdruck verschiedener Druck herrschen, so wird, sowie die Dichtwirkung nachläßt, ein Druckausgleich einsetzen. Dadurch bedingt kommt es zu einer Geräuschentwicklung, z.B. einem Pfeifen, durch das der Anwender eine deutliche Warnung erhält und entsprechend sicherheitsgerichtet handeln kann.

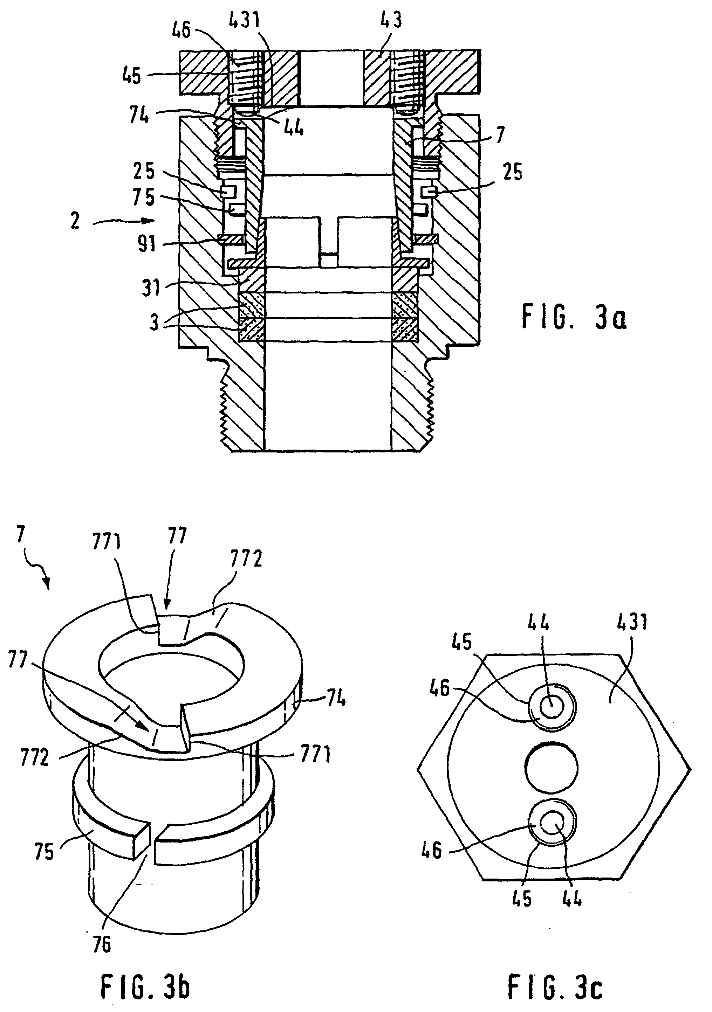

Fig. 3a zeigt im Längsschnitt ein zweites Ausführungsbeispiel eines erfindungsgemäßen Meßgeräts. Es werden nachfolgend nur diejenigen seiner Bestandteile beschrieben, in denen es sich von dem in Fig. 2a dargestellten Meßgerät unterscheidet.

Bei dem in Fig. 3a dargestellten Meßgerät ist eine erste Rastvorrichtung vorgesehen, durch die ein Anheben des Fixierelements 7 in der Muffe 2 und/oder dessen Herausheben aus der Muffe 2 in dichtungs-abgewandter Richtung nur in mindestens einer bestimmten durch Drehung des Fixierelements 7 um dessen Längsachse herbeizuführenden Lage möglich ist.

Die erste Rastvorrichtung besteht aus zwei Teilen: zwei in der Muffe 2 einander diametral gegenüberliegenden Rastzapfen 25 und einer an dem Fixierelement 7 angeformten umlaufenden Schulter 75, die durch zwei einander diametral gegenüberliegende Aussparungen 76 unterbrochen ist.

Die Abmessungen der Schulter 75 und der Aussparungen 76 sind so gewählt, daß das Fixierelement 7 nur dann aus der Muffe 2 herausnehmbar ist, wenn das Fixierelement 7 durch Drehung um seine Längsachse in eine Lage gebracht worden ist, in der die Aussparungen 76 mit den Rastzapfen 25 zur Deckung kommen. In allen anderen Drehpositionen wird das Fixierelement 7 durch die an die Rastzapfen 75 anstoßende Schulter 75 in der Muffe 2 gehalten. Fig. 3b zeigt eine perspektivische Ansicht des Fixierelements 7.

Es ist eine zweite Rastvorrichtung vorgesehen, die zwei auf der Ringfläche 431 des Druckrings 4 angeordnete Rastnasen 44 und zwei im Fixierelement 7 an dessen druckring-zugewandtem Ende im Absatzring 74 angeordnete Rastkerben 77 aufweist. Es ist genauso möglich, nur eine einzige oder mehr als zwei Rastnasen 44 und Rastkerben 77 einzusetzen. Zwei sind jedoch insofern vorteilhaft, da mit einer geringen Anzahl von Bauteilen eine symmetrische Krafteinwirkung beim Einrasten sichergestellt ist und Verspannungen oder Verkantungen vermieden werden.

Der Druckring 4 weist zwei einander diametral gegenüber liegende, in dem Absatzring 43 angeordnete, parallel zur Längsachse des Druckrings 4 verlaufende, durchgehende Bohrungen 45 auf, wie Fig. 3c zeigt. In diese Bohrungen 45 sind Gewindestifte 46 eingeschraubt, in deren Innerem die Rastnasen 44 in axialer Richtung federnd fixiert sind. Durch eine axiale Krafteinwirkung sind die Rastnasen 44 in den Gewindestiften 46 versenkbar.

Die Rastkerben 77 sind Ausnehmungen, die im Absatzring 74 auf dessen druckring-zugewandter Seite angeordnet sind. Sie weisen jeweils als eine erste Begrenzung eine Stufe 771 und als eine zweite Begrenzung eine Rampe 772 auf. Die Rampen 772 sind auf derjenigen Seite der Rastkerbe 77 anzubringen, über die sich eine oberhalb von ihr befindliche Rastnase 44 beim Einschrauben des Druckrings 4 zuerst hinweg bewegt. In dem Ausführungsbeispiel der Fig. 3a ist der Druckring 4 eine rechtsgängige Schraube. Die Rampen 772 bilden von der druckring-zugewandten Seite her gesehen jeweils die rechte Begrenzung der Rastkerben 77.

Bei der Montage des Meßgeräts werden die Dichtung 3, der Distanzring 31 und der Klemmkonus 6 nacheinander in dieser Reihenfolge in die Muffe 2 eingebracht. Es ist ein ausreichender Abstand in axialer Richtung zwischen den Rastzapfen 25 und dem Distanzring 31 vorzusehen, damit der Klemmkonus 6 zumindest in Schräglage einbringbar ist. Das Fixierelement 7 wird nun auf den Klemmkonus 6 aufgesteckt. In dieser Position befinden sich die Rastzapfen 25 auf der dichtungs-abgewandten Seite der Schulter 75. Anschließend wird der Druckring 4 auf die Muffe 2 gesetzt und der Stutzen 1 eingebracht. Die Rastnasen 44 und die Rastkerben 77 behindern das Einschrauben des Druckrings 4 nicht, da die Rastnasen 44 die Rampen 772 hinaufgleiten. Die Abdichtung und die Einspannung des Stutzens 1 erfolgen genau wie in dem in Fig. 2 dargestellten Ausführungsbeispiel.

Bei Verwendung von im Druckring 4 versenkbaren Rastnasen 44 liegt der Druckring 4 plan auf der durch die Rastkerben 77 unterbrochenen ringförmigen Stirnfläche des Fixierelements 7 auf.

Beim Lösen des Druckrings 4 haken die Rastnasen 44 an den Stufen 771 ein. Stutzen 1, Fixierelement 7 und Klemmkonus 6 werden bei einer Drehung des Druckrings 4 ebenfalls gedreht. Der Druckring 4 bewegt sich durch die Drehung in axialer Richtung aus der Muffe 2 heraus. Entsprechend löst sich die Einspannung der Dichtung 3 und diese wird unwirksam.

Ist der am Meßort herrschende Druck gleich dem Umgebungsdruck und wird das Herausschrauben fortgesetzt, so erfährt der Druckring 4 weiterhin einen Hub in axialer Richtung. Sobald dieser Hub größer als die Länge der Rastnasen 44 ist, löst sich die zweite Rastvorrichtung. Stutzen 1, Fixierelement 7 und Klemmkonus 6 werden nicht mehr mitgedreht. Der Druckring 4 kann vollständig gelöst werden.

Herrscht am Meßort ein vom Umgebungsdruck verschiedener Druck, führt der einsetzende Druckausgleich zu einem deutlichen Warngeräusch, z.B. einem Pfeifen.

Ist der am Meßort herrschende Druck größer als der Umgebungsdruck, so kann der Druckring 4 nicht vollständig gelöst werden.

Zu Beginn des Lösens des Druckrings 4 wird die Dichtung 3 entspannt. Der am Meßort herrschende Überdruck wirkt über den Stutzen 1 auf das Fixierelement 7 ein und verschiebt dieses in axialer Richtung. Es wird somit gegen den Druckring 4 gepreßt. Die Rastnasen 44 bleiben in den Rastkerben 77 eingerastet, und Druckring 4 und Fixierelement 7 bewegen sich durch die Drehung des Druckrings 4 solange in axialer Richtung aus der Muffe 2 heraus, bis die durch die Schulter 75 mit den Aussparungen 76 und die Rastzapfen 25 gebildete erste Rastvorrichtung greift.

Ist das Fixierelement 7 in der ersten Rastvorrichtung einrastet, so ist es nicht mehr drehbar. Über die zweite Rastvorrichtung, nämlich die in den Rastkerben 77 eingerasteten Rastnasen 44, ist das Fixierelement 7 mit dem Druckring 4 verbunden. Eine Drehung des Druckrings 4 ist in diesem Zustand nicht ohne eine Drehung des Fixierelements 7 möglich.

Da der Druckring 4 nur durch Drehung von der Muffe 2 lösbar ist, kann er erst dann bzw. nur dann entfernt werden, wenn kein Überdruck am Meßort herrscht. Je nach Einbaulage des Meßgeräts löst sich die erste Rastvorrichtung dann entweder von selbst, indem das Fixierelement 7 aufgrund der Schwerkraft in axialer, dichtungs-zugewandter Richtung fällt, oder sie kann dann gelöst werden, indem der Druckring 4 erneut eingeschraubt und anschließend vollständig herausgeschraubt wird. Durch das erneute Einschrauben des Druckrings 4 wird das Fixierelement 7 in dichtungs-zugewandter Richtung bewegt, wodurch die Rastzapfen 25 aus den Aussparungen 76 herausbewegt werden.

Es ist nicht möglich, das Meßgerät bei Überdruck am Meßort zu entfernen. Diese eine Fehlbedienung darstellende Handlung ist daher völlig ausgeschlossen. Zusätzlich bleibt der Stutzen 1 bei Einwirken eines Druckes in der Klemmvorrichtung eingespannt. Er kann nicht aus der Muffe 2 herausgelangen, auch nicht, wenn ein sehr großer Druck auf diesen einwirkt.

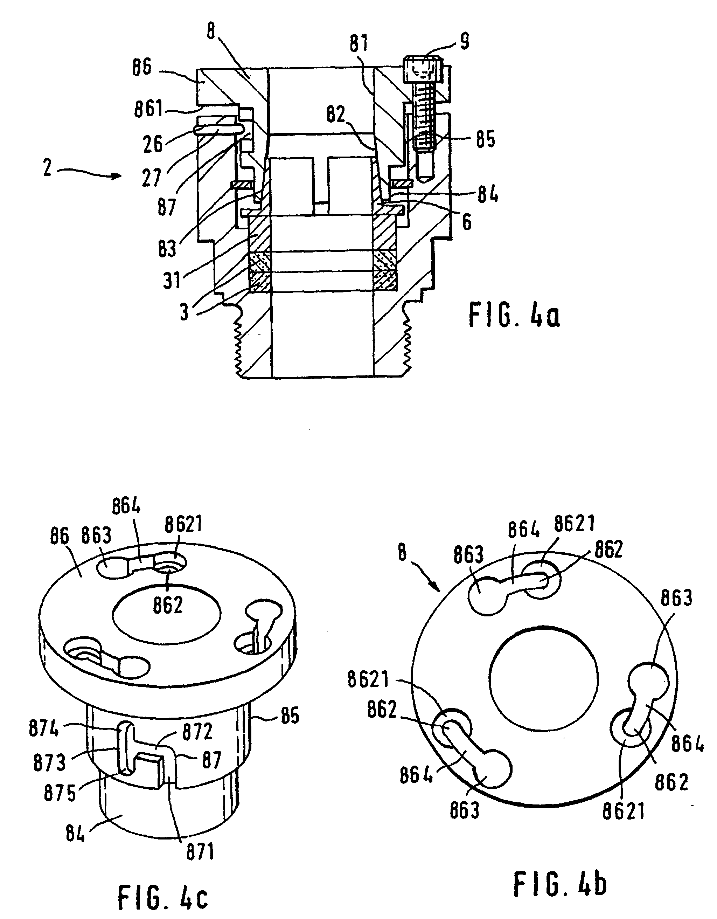

In den Figuren 4a bis 4c ist ein drittes Ausführungsbeispiel dargestellt. Es werden hier lediglich die Unterschiede zu den vorangehenden Ausführungsbeispielen näher erläutert. Der Stutzen 1 ist in Fig. 4a der besseren Übersicht halber nicht dargestellt. Er kann identisch von Fig. 1 übernommen werden.

In diesem Ausführungsbeispiel sind Fixierelement und Druckring als ein einziges, im folgenden als Montageelement 8 bezeichnetes Bauteil ausgeführt. Innen weist es zwei Bereiche auf, einen zylindrischen dichtungs-abgewandten ersten Abschnitt 81 und einen konischen dichtungs-zugewandten zweiten Abschnitt 82. Der Innendurchmesser des Abschnitts 82 nimmt in klemmkonus-zugewandter Richtung zu und ist in seiner Form der Geometrie des Klemmkonus 6 angepaßt. Das Montageelement 8 liegt folglich mit einer inneren konischen Mantelfläche 83 paßgenau auf dem Klemmkonus 6 auf.

Außen weist das Montageelement 8 einen zylindrischen dichtungs-zugewandten ersten Abschnitt 84 auf. An diesen schließt ein zweiter Abschnitt 85 mit einem größeren Außendurchmesser an. Am freiem Ende des zweiten Abschnitts 85 ist ein sich radial nach außen erstreckender Befestigungsring 86 angeformt. Das Montageelement 8 liegt in eingebautem Zustand mit einer dichtungs-zugewandten Stirnfläche 861 des Befestigungsrings 86 auf einer ringförmigen Stirnfläche 26 der Muffe 2 auf.

Das Montageelement 8 ist durch drei durch den Befestigungsring 86 hindurch in drei in der Muffe 2 angeordnete Bohrungen einzuschraubende Schrauben 9 auf der Muffe 2 befestigt. Im Befestigungsring 86 sind hierzu drei Bohrungspaare angeordnet. Eine erste durchgehende Bohrung 862 und eine zweite durchgehende Bohrung 863 sind benachbart zueinander angebracht. Die erste Bohrung 862 weist jeweils einen Innendurchmesser auf, der kleiner als der größte Durchmesser der Schrauben 9, hier der Durchmesser von deren Kopf, ist. Die zweite Bohrung 863 weist jeweils einen Innendurchmesser auf, der größer als der größte Durchmesser der Schrauben 9 ist. Erste und zweite Bohrung 862, 863 sind jeweils durch einen Kanal 864 miteinander verbunden, dessen Breite geringer als der größte Durchmesser der Schrauben 9 ist.

Die Bohrungen 862, die den kleineren Innendurchmesser aufweisen, haben an deren muffen-abgewandten Enden jeweils einen Abschnitt 8621, in dem ein druckring-zugewandter Abschnitt eines Kopfs der Schrauben 9 versenkbar ist.

Der Absatzring 86 bildet einen Druckring, und die verbleibenden Bereiche des Montageelements 8 bilden ein Fixierelement.

Es ist eine erste Rastvorrichtung vorgesehen, die einen in der Muffe 2 angeordneten Rastzapfen 27 aufweist. Dessen Gegenstück bildet eine im mittleren Abschnitt 85 des Montageelements 8 angeordnete Führungsnut 87. In diese ist der Rastzapfen 27 bei der Montage einzuschieben.

Die Führungsnut 87 ist in den Abschnitt 85 eingeschnitten, z.B. eingefräst. Sie weist drei Bereiche auf: einen ersten Eingang 871, der parallel zur Längsachse des Montageelements 8 verläuft und der bis an die Grenze zwischen den Abschnitten 84 und 85 reicht. An diesen Eingang 871 schließt ein mittlerer Bereich 872 an, der in einem Winkel zur Längsachse des Montageelements 8 verläuft. Im Ausführungsbeispiel verläuft er unter 90° dazu. Dies bewirkt, daß das Montageelelement 8 um seine Längsachse gedreht werden muß, damit die Rastnase 27 durch diesen Bereich 872 in einen daran anschließenden Endbereich 873 gelangt. Dieser weist zwei Sackbohrungen 874, 875 auf, die parallel zur Längsachse des Montageelements 8 verlaufen. Die Sackbohrung 874 verläuft, ausgehend von dem Bereich 872, in dichtungs-abgewandter Richtung und ermöglicht daher eine Bewegung des Montageelements 8 in dichtungs-zugewandter Richtung. Die Sackbohrung 875 verläuft, ausgehend von dem Bereich 872, in dichtungs-zugewandter Richtung und ermöglicht daher eine Bewegung des Montageelements 8 in dichtungs-abgewandter Richtung.

Die erste Rastvorrichtung, die aus Führungsnut 87 und der Rastnase 27 besteht, bewirkt, daß ein Anheben des Montageelements 8 in der Muffe 2 und/oder dessen Herausheben aus der Muffe 2 in dichtungs-abgewandter Richtung nur durch Drehung des Montageelements 8 um dessen Längsachse möglich ist. Es nicht möglich, die Rastnase 27 auf eine andere Weise durch den mittleren Bereich 872 hindurch zum Eingang 871 zu bewegen.

Beim Anbringen des Montageelements 8 auf der Muffe 2 ist die Rastnase 27 mit dem Eingang 871 der Führungsnut 87 zur Deckung zu bringen. Entsprechend der Geometrie der Führungsnut 87 ist das Montageelement 8 über eine Distanz, die gleich der Länge des Eingangs 871 ist in axialer Richtung in die Muffe 2 hineinzuschieben. Anschließend ist es zu drehen, bis sich die Rastnase 27 im Endbereich 873 der Führungsnut 87 befindet. Durch das Anziehen der Schrauben 9 wird das Montageelement 8 bis in eine Endlage in die Muffe 2 hineinbewegt. Dies ist nur möglich, wenn die Rastnase 27 sich im Endbereich 873 befindet. Nur in dieser durch Drehung des Montageelements zu erzielenden Lage erlaubt die Sackbohrung 874 eine weitere Verschiebung des Montageelements 8 in dichtungs-zugewandter Richtung.

Durch diese Verschiebung wird das Montageelement 8 auf den Klemmkonus 6 gespannt. Der Klemmkonus 6 wird dabei sowohl zusammmengedrückt, so daß der Spalt 62 abnimmt, als auch auf den Distanzring 31 gedrückt. Der Druck auf den Distanzring 31 überträgt sich auf die Dichtung 3. Diese wird in axialer Richtung gepreßt, dehnt sich folglich in radialer Richtung aus und wird somit durch das Einschrauben des Montageelements 8 wirksam.

Die Befestigung des Stutzens 2 in der Muffe 2 erfolgt, indem der Klemmkonus 6 zusammengedrückt und somit gegen den Stutzen 1 gepreßt wird; somit ist er im Klemmkonus 6 eingespannt. Die Befestigung des Stutzens 1 in der Muffe 2 und das Einspannen der Dichtung 3 erfolgen in einem einzigen Arbeitsschritt.

zu Beginn des Lösens der Schrauben 9 und damit des Montageelements 8 wird die Dichtung 3 entspannt. Ein am Meßort herrschender vom Umgebungsdruck verschiedener Druck wirkt auf das Montageelement 8 ein.

Herrscht am Meßort ein Unterdruck, so verbleibt das Montageelement 8 in seiner Lage. Die Rastnase 27 verbleibt in der Sackbohrung 874. Da diese parallel zur Längsachse des Montageelements 8 verläuft, ist dieses nicht drehbar. Es kann nicht entfernt werden.

Herrscht am Meßort ein Überdruck, so wird das Montageelement 8 in axialer Richtung bewegt. Die Köpfe der Schrauben 9 verbleiben somit zunächst in den Abschnitten 861, und eine Drehung des Montageelements 8 ist schon aus diesem Grund nicht möglich. Die Rastnase 27 wandert bei dieser axialen dichtungs-abgewandten Verschiebung des Montageelements 8 im Endbereich 873 von der Sackbohrung 874 in die Sackbohrung 875, bis die Rastnase 27 das geschlossene Ende der Sackbohrung 875 erreicht und eine weitere Verschiebung des Montageelements 8 blockiert. Da die Sackbohrung 875 parallel zur Längsachse des Montageelements 8 verläuft, ist dieses nicht drehbar. Es kann folglich nicht entfernt werden.

Die Einspannung des Klemmkonus 6 im Montageelement 8 bleibt während dieser Verschiebung bestehen, so daß der Stutzen 1 nicht durch den einwirkenden Druck aus der Muffe 2 herausgedrückt bzw. in einen Behälter hineingesaugt werden kann.

Es wäre ebenso möglich, statt der in diesem Ausführungsbeispiel beschriebenen Bohrungspaare jeweils Einzelbohrungen einzusetzen. Dies böte den Vorteil, daß das Montageelement 8 vereinfacht wird und somit kostengünstiger herstellbar wäre; es birgt jedoch den Nachteil, daß der Anwender die Schrauben aus den Einzelbohrungen vollständig herausschrauben muß, bevor er das Montageelement 8 drehen kann. Dies ist sowohl bei der Montage als auch bei der Demontage des Meßgeräts erforderlich. Auch wird dem Anwender durch die Bohrungspaare deutlich, daß eine Drehung des Montageelements 8 erforderlich ist. Dieser Hinweis wäre bei Einzelbohrungen nicht gegeben.

Ein weiteres Ausführungsbeispiel eines erfindungsgemäßen Meßgeräts ist eine Modifikation des letztbeschriebenen in den Figuren 4a, 4b und 4c dargestellten Ausführungsbeispiels. Danach sind die Schrauben 9 in der Muffe 2 so befestigt, daß sie nicht vollständig aus der Muffe 2 herausgeschraubt werden können. Dies geschieht beispielsweise, indem sie im Inneren der Muffe 2 verankert sind. Die Führungsnut 87 und der Rastzapfen 27 sind bei diesem Ausführungsbeispiel überflüssig und entfallen. Beim Lösen der Schrauben 9 wird das Montageelement 8 durch einen im Behälter herrschenden Überdruck in muffen-abgewandter Richtung verschoben. Die Abschnitte der Köpfe der Schrauben 9 bleiben in den Abschnitten 8621 der ersten Bohrungen 862 versenkt. Es ist somit nicht möglich, das Montageelement 8 zu drehen. Die Schrauben 9 können somit nicht durch die Kanäle 864 zu den zweiten Bohrungen 863 gelangen. Nur wenn sich die Schrauben 9 in den zweiten Bohrungen 863 befinden, so kann das Montageelement 8 über die Schrauben 9 hinweggehoben und von der Muffe 2 entfernt werden. Damit das Montageelement 8 von der Muffe 2 gelöst werden kann, ist es in diese Lage zu drehen. Es ist jedoch nicht drehbar, wenn die Köpfe der Schrauben 9 in den Abschnitten 8621 versenkt sind. Herrscht am Meßort ein Überdruck, so kann folglich das Montageelement 8 nicht entfernt werden.

## Patentansprüche

1. Meßgerät, das umfaßt:
- einen Stutzen (1) mit einem zylindrischen Abschnitt,
- eine den zylindrischen Abschnitt des Stutzens (1) klemmende Einspannvorrichtung (6, 7; 6, 8),
- eine die Einspannvorrichtung (6, 7; 6, 8) halternde Muffe (2) zum Fixieren des Meßgeräts an einem Meßort sowie
- einen lösbar in der Muffe (2) befestigten Druckring (4; 8),
- wobei die Einspannvorrichtung (6, 7; 6, 8) zwischen Druckring (4; 8) und einem Absatz (221) der Muffe (2) eingespannt ist und
- wobei ein dabei auf die Einspannvorrichtung (6, 7; 6, 8) axial wirkender Druck mittels des Druckrings (4; 8) eingestellt ist,
**dadurch gekennzeichnet, daß** die Einspannvorrichtung (6,7 ; 6,8) einen den zylindrischen Abschnitt des Stutzen (1) mindestens teilweise umgreifenden Klemmkonns (6) und eine den Klemmkonns (6) gegen den zylindrischen Abschritt des Stutzen (1) pressendes Fixierelement (7) aufweist, wobei die Verbindung zwischen Klemmkonus (6) und Fixierelement (7), insb. auch bei verringertem axialen Druck oder entferntem Druckring, durch Selbsthemmung gegen ungewolltes Lösen gesichert ist.

2. Meßgerät nach Anspruch 1, **dadurch gekennzeichnet, daß** beim Lösen des Druckrings (4)
- ein am Meßort herrschender Überdruck auf die Klemmvorrichtung einwirkt und diese in axialer Richtung verschiebt, bis diese in einer ersten Rastvorrichtung einrastet und
- daß die Einspannvorrichtung im eingerasteten Zustand fest oder über eine zweite Rastvorrichtung mit dem Druckring (4) verbunden ist, so daß der Druckring (4) in dessen Lage fixiert ist und nicht vollständig von der Muffe (2) lösbar ist.

3. Meßgerät nach einem der vorherigen Ansprüche, **dadurch gekennzeichnet, daß**
- der Klemmkonus (6) eine durchgehende axiale Bohrung (61) sowie einen durchgehenden, in axialer Richtung verlaufenden Spalt (2) und
- das Fixierelement (7) eine innere konische Mantelfläche (73) aufweisen, die den Klemmkonus (6) von außen flächig berührt.

4. Meßgerät nach Anspruch 3, **dadurch gekennzeichnet, daß** das Fixierelement (7) und der Druckring (4) ein einziges einteiliges Montageelement (8) sind.

5. Meßgerät nach einem der vorherigen Ansprüche, **dadurch gekennzeichnet, daß** zwischen Muffe (2) und Stutzen (1), insb. auf diesen aufgeschoben, eine Dichtung (3) angeordnet ist, die in einer Endlage zwischen der Einspannvorrichtung (6, 7; 6, 8) und dem Absatz (221) der Muffe (2) unter Druck gehalten ist.

6. Meßgerät nach Anspruch 5, **dadurch gekennzeichnet, daß**
- der Klemmkonus (6) mit einer fixierelement-abgewandten Grundfläche auf der Dichtung (3) oder auf einem auf der Dichtung (3) aufliegenden Distanzring (31) und daß
- die Dichtung (3) auf einer in der Muffe (2) angeordneten Absatzfläche (221) liegt.

7. Meßgerät nach Anspruch 5, **dadurch gekennzeichnet, daß** ein Sprengring (91) in einer auf der dichtung-abgewandten Seite des Klemmkonus (6) in einer in der Muffe (2) angeordneten ringförmigen Nut (24) eingebracht ist.

8. Meßgerät nach Anspruch 3, **dadurch gekennzeichnet, daß** die Neigungswinkel der Koni von Klemmkonus (6) und Fixierelement (7, 8) jeweils spitze Winkel sind, die insb. 8° nicht übersteigen.

9. Meßgerät nach Anspruch 3, **dadurch gekennzeichnet, daß** der Druckring (4) mit einer Ringfläche (431) eines sich radial nach innen erstreckenden Absatzrings (43) auf einem Absatz (74) des Fixierelements (7) aufliegt.

10. Meßgerät nach Anspruch 1 oder 3, **dadurch gekennzeichnet, daß** der Druckring (4, 8) nur durch mindestens eine Drehung um dessen Längsachse von der Muffe (2) trennbar ist.

11. Meßgerät nach Anspruch 9, **dadurch gekennzeichnet, daß** der Druckring (4) in die Muffe (2) eingeschraubte ist.

12. Meßgerät nach Anspruch 9, **dadurch gekennzeichnet,**
- **daß** der Druckring (8)mittels mindestens einer parallel zur Längsachse des Druckrings (8) angeordneten Schraube (9) auf der Muffe (2) befestigt ist, und
- **daß** in dem Druckring (8) mindestens ein Bohrungspaar angeordnet ist, das
- - eine erste Bohrung (862) und eine zweite Bohrung (863) aufweist,
- - - wobei die erste Bohrung (862) einen Innendurchmesser hat, der kleiner als der größte Schraubendurchmesser ist,
- - - wobei die zweite Bohrung (863) einen Innendurchmesser hat, der größer als der größte Schraubendurchmesser ist, und
- - - wobei die erste Bohrung (862) und die zweite Bohrung (863) durch einen Kanal (864) miteinander verbunden sind,
- - - - dessen Breite geringer als der-größte Schraubendurchmesser ist.

13. Meßgerät nach Anspruch 11, **dadurch gekennzeichnet, daß** die erst Bohrung (862) an deren muffen-abgewandtem Ende jeweils einen Abschnitt (8621) aufweist, in dem ein druckring-zugewandter Abschnitt eines Schraubenkopfs der Schrauben (9) versenkt ist und daß die Schrauben (9) nicht vollständig aus der Muffe (2) herausschraubbar sind.

14. Meßgerät nach Anspruch 5, **dadurch gekennzeichnet, daß** eine erste Rastvorrichtung vorgesehen ist, durch die ein Anheben des Fixierelements (7, 8) in der Muffe (2) und/oder ein Herausheben des Fixierelements (7, 8) aus der Muffe (2) in dichtungs-abgewandter Richtung nur in mindestens einer bestimmten, durch Drehung des Fixierelements (7, 8) um dessen Längsachse herbeizuführenden Lage möglich ist.

15. Meßgerät nach Anspruch 14, **dadurch gekennzeichnet, daß** die erste Rastvorrichtung gebildet ist durch
- mindestens einen in der Muffe (2) angeordneten Rastzapfen (25) und
- eine an dem Fixierelement (7) angeformte umlaufende Schulter (75),
- - die mindestens eine Aussparung (76) aufweist.

16. Meßgerät nach Anspruch 14, **dadurch gekennzeichnet, daß** die erste Rastvorrichtung gebildet ist durch
- mindestens einen in der Muffe(2) angeordneten Rastzapfen (27) und
- mindestens eine in dem Fixierelement (8) angeordnete Führungsnut (87),
-- in die der Rastzapfen (27) bei der Montage des Fixierelements (8) einzuschieben ist, wobei das Fixierelement (8) eine Drehung um dessen Längsachse erfährt.

17. Meßgerät nach Anspruch 16, **dadurch gekennzeichnet, daß**
- die Führungsnut (87) mindestens eine Sackbohrung (874, 875) aufweist,
-- die parallel zur Längsachse des Fixierelements (8) verläuft.

18. Meßgerät nach Anspruch 3, **dadurch gekennzeichnet, daß** ein am Meßort herrschender Druck beim Lösen des Druckrings (4, 8) auf das Fixierelement (7, 8) einwirkt und dieses in axialer Richtung verschiebt, bis das Fixierelement (7, 8) in einer ersten Rastvorrichtung einrastet.

19. Meßgerät nach Anspruch 18, **dadurch gekennzeichnet, daß**
- das Fixierelement (7, 8)
-- im eingerasteten Zustand nicht drehbar ist und
-- mit dem Druckring (4, 8) fest oder über eine zweite Rastvorrichtung verbunden ist, so daß eine Drehung des Druckrings (4, 8) nur mit einer Drehung des Fixierelements (7, 8) möglich ist, und daß
- der Druckring (4, 8) nur durch die Drehung von der Muffe (2) lösbar ist.

20. Meßgerät nach Anspruch 19, **dadurch gekennzeichnet, daß** die zweite Rastvorrichtung mindestens eine, insb. eine durch axiale Krafteinwirkung versenkbare, auf einer fixierelement-zugewandten Ringfläche (431) des Druckrings (4) angeordnete Rastnase (44) und eine entsprechende Anzahl von im Fixierelement (7) an dessen druckring-zugewandtem Ende angeordneten Rastkerben (77) aufweist.

## Claims

1. A measuring instrument which comprises
- a socket (1) with a cylindrical portion,
- a clamping device (6, 7; 6, 8) clamping the cylindrical portion of the socket (1),
- a sleeve (2) holding the clamping device (6, 7; 6, 8) in order to fix the measuring instrument at a measurement location, and
- a thrust collar (4; 8) fastened in a releasable manner in the sleeve (2),
- wherein the clamping device (6, 7; 6, 8) is clamped between the thrust collar (4; 8) and a shoulder (221) of the sleeve (2), and
- wherein a pressure acting axially upon the clamping device (6, 7; 6, 8) is set by means of the thrust collar (4; 8),
**characterized in that** the clamping device (6, 7; 6, 8) comprises a clamping cone (6) engaging at least in part around the cylindrical portion of the socket (1) and a fixing element (7) pressing the clamping cone (6) against the cylindrical portion of the socket (1), wherein the connexion between the clamping cone (6) and the fixing element (7), in particular even with the axial pressure reduced or the thrust collar removed, is prevented by self-locking from becoming inadvertently released.

2. A measuring instrument according to Claim 1, **characterized in that** when the thrust collar (4) is released,
- an over-pressure prevailing at the measurement location is exerted upon the clamping device and displaces the latter in the axial direction until it engages in a first catch device, and
- in the engaged state the clamping device is connected to the thrust collar (4) in a fixed manner or by way of a second catch device, so that the thrust collar (4) is fixed in its position and cannot be completely released from the sleeve (2).

3. A measuring instrument according to one of the preceding Claims, **characterized in that**
- the clamping cone (6) has a continuous axial bore (61) as well as a continuous gap (2) extending in the axial direction, and
- the fixing element (7) has an internal conical generated surface (73) which touches the clamping cone (6) from the outside in a planar manner.

4. A measuring instrument according to Claim 3, **characterized in that** the fixing element (7) and the thrust collar (4) constitute a single one-piece assembly element (8).

5. A measuring instrument according to one of the preceding Claims, **characterized in that** a seal (3), which is held under pressure in an end position between the clamping device (6, 7; 6, 8) and the shoulder (221) of the sleeve (2), is arranged between the sleeve (2) and the socket (1), and in particular is pressed onto the latter.

6. A measuring instrument according to Claim 5, **characterized in that**
- the clamping cone (6) rests with a bottom face - remote from the fixing element - upon the seal (3) or upon a spacer ring (31) resting on the seal (3), and
- the seal (3) rests upon a shoulder face (221) provided in the sleeve (2).

7. A measuring instrument according to Claim 5, **characterized in that** a spring ring (91) is inserted into an annular groove (24) situated in the sleeve (2) on a side of the clamping cone (6) remote from the seal.

8. A measuring instrument according to Claim 3, **characterized in that** the angle of inclination of the cones of the clamping cone (6) and the fixing element (7, 8) are each acute angles which do not exceed 8° in particular.

9. A measuring instrument according to Claim 3, **characterized in that** the thrust collar (4) rests with an annular face (431) of a shoulder ring (43) extending radially inwards upon a shoulder (74) of the fixing element (7).

10. A measuring instrument according to Claim 1 or 3, **characterized in that** the thrust collar (4, 8) can be separated from the sleeve (2) only by at least one rotation about its longitudinal axis.

11. A measuring instrument according to Claim 9, **characterized in that** the thrust collar (4) is screwed into the sleeve (2).

12. A measuring instrument according to Claim 9, **characterized in that**
- the thrust collar (8) is fastened to the sleeve (2) by means of at least one screw (9) arranged parallel to the longitudinal axis of the thrust collar (8), and
- at least one pair of bores is provided in the thrust collar (8),
- - the said pair of bores comprising a first bore (862) and a second bore (863),
- - - wherein the first bore (862) has an internal diameter which is smaller than the largest diameter of the screw,
- - - wherein the second bore (863) has an internal diameter which is larger than the largest diameter of the screw, and
- - - wherein the first bore (862) and the second bore (863) are connected to each other by a duct (864),
- - - - the width of which is smaller than the largest diameter of the screw.

13. A measuring instrument according to Claim 11, **characterized in that** the first bore (862) is provided at its end remote from the sleeve with a respective portion (8621) in which a portion of a head of the screws (9) remote from the thrust collar is recessed, and the screws (9) cannot be unscrewed out of the sleeve (2) completely.

14. A measuring instrument according to Claim 5, **characterized in that** a first catch device is provided by which the fixing element (7, 8) can be lifted in the sleeve (2) and/or the fixing element (7, 8) can be lifted out of the sleeve (2) in a direction remote from the seal only in at least one specified position resulting from the rotation of the fixing element (7, 8) about its longitudinal axis.

15. A measuring instrument according to Claim 14, **characterized in that** the first catch device is formed by
- at least one catch pin (25) arranged in the sleeve (2), and
- a continuous shoulder (75) which is formed integrally on the fixing element (7) and
- - which has at least one opening (76).

16. A measuring instrument according to Claim 14, **characterized in that** the first catch device is formed by
- at least one catch pin (27) situated in the sleeve (2), and
- at least one guide groove (8) which is situated in the fixing element (8) and
- - into which the catch pin (27) is to be inserted during the assembly of the fixing element (8), the fixing element (8) performing a rotation about its longitudinal axis.

17. A measuring instrument according to Claim 16, **characterized in that**
- the guide groove (87) has at least one blind bore (874, 875)
- - which extends parallel to the longitudinal axis of the fixing element (8).

18. A measuring instrument according to Claim 3, **characterized in that** when the thrust collar (4, 8) is released a pressure prevailing at the measurement location acts upon the fixing element (7, 8) and displaces it in the axial direction until the fixing element (7, 8) engages in a first catch device.

19. A measuring instrument according to Claim 18, **characterized in that**
- the fixing element (7, 8)
- - is not rotatable in the engaged state, and
- - is connected to the thrust collar (4, 8) in a fixed manner or by way of a second catch device, so that rotation of the thrust collar (4, 8) is possible only by a rotation of the fixing element (7, 8), and
- the thrust collar (4, 8) can be released from the sleeve (2) only by the rotation.

20. A measuring instrument according to Claim 19, **characterized in that** the second catch device comprises at least one catch projection (44) - in particular a catch projection which can be lowered by the action of axial force - arranged on an annular face (431) of the thrust collar (4) facing the fixing element, and a corresponding number of catch notches (77) provided in the fixing element (7) at the end thereof facing the thrust collar.

## Revendications

1. Appareil de mesure, qui comprend :
- une tubulure (1) ayant une section cylindrique,
- un dispositif de fixation (6, 7 ; 6, 8) calant la section cylindrique de la tubulure (1),
- un manchon (2) maintenant le dispositif de fixation (6, 7 ; 6, 8) afin de fixer l'appareil de mesure au niveau d'un emplacement de mesure ainsi que
- un anneau de pression (4 ; 8) fixé de manière amovible dans le manchon (2),
- moyennant quoi le dispositif de fixation (6, 7 ; 6, 8) est fixé entre l'anneau de pression (4 ; 8) et un décrochement (221) du manchon (2) et
- moyennant quoi une pression s'exerçant de manière axiale sur le dispositif de fixation (6, 7 ; 6, 8) est réglée à l'aide d'un anneau de pression (4 ; 8),
**caractérisé en ce que** le dispositif de fixation (6, 7 ; 6, 8) présente un cône de serrage (6) enveloppant au moins en partie la section cylindrique de la tubulure (1) et un élément de fixation (7) appuyant le cône de serrage (6) contre la section cylindrique de la tubulure (1), et le raccordement entre le cône de serrage (6) et l'élément de fixation (7), en particulier également en présence d'une pression axiale réduite ou d'un anneau de pression éloigné, est sûr de ne pas faire l'objet d'un retrait inopiné en raison d'un blocage automatique.

2. Appareil de mesure selon la revendication 1, **caractérisé en ce que**, lorsqu'on retire l'anneau de pression (4),
- une surpression régnant à l'emplacement de la mesure s'exerce sur le dispositif de serrage et le déplace dans la direction axiale jusqu'à ce qu'il s'enclenche dans un premier dispositif d'enclenchement et
- **en ce que**, à l'état enclenché, le dispositif de fixation est raccordé de manière fixe ou par l'intermédiaire d'un deuxième dispositif d'enclenchement avec l'anneau de pression (4), de telle sorte que l'anneau de pression (4) est fixé dans sa position et n'est pas complètement amovible par rapport au manchon (2).

3. Appareil de mesure selon l'une quelconque des revendications précédentes, **caractérisé en ce que**
- le cône de serrage (6) présente un alésage (61) axial continu ainsi qu'une fente (2) continue s'étendant dans la direction axiale et
- l'élément de fixation (7) présente une surface de revêtement (73) conique intérieure, qui entre en contact depuis l'extérieur affleurant avec le cône de serrage (6).

4. Appareil de mesure selon la revendication 3, **caractérisé en ce que** l'élément de fixation (7) et l'anneau de pression (4) constituent un seul élément de montage (8) d'une seule pièce.

5. Appareil de mesure selon l'une quelconque des revendications précédentes, **caractérisé en ce que**, entre le manchon (2) et la tubulure (1) est disposé un joint d'étanchéité qui effectue en particulier un mouvement coulissant sur celle-ci, maintenu sous pression dans une position finale entre le dispositif de fixation (6, 7 ; 6, 8) et le décrochement (221) du manchon (2).

6. Appareil de mesure selon la revendication 5, **caractérisé en ce que** :
- le cône de serrage (6) est placé avec une surface de fond opposée à l'élément de fixation sur le joint d'étanchéité (3) ou sur un anneau d'écartement (31) reposant sur le joint d'étanchéité (3), et **en ce que**
- le joint d'étanchéité (3) se trouve sur une surface du décrochement (211) disposée dans le manchon (2).

7. Appareil de mesure selon la revendication 5, **caractérisé en ce qu'**une bague de retenue (91) est introduite d'un côté du cône de serrage (6) opposé au joint d'étanchéité dans une rainure (24) annulaire disposée dans le manchon (2).

8. Appareil de mesure selon la revendication 3, **caractérisé en ce que** les angles d'inclinaison des cônes du cône de serrage (6) et de l'élément de fixation (7, 8) sont chaque fois des angles aigus qui ne dépassent pas, en particulier, 8°.

9. Appareil de mesure selon la revendication 3, **caractérisé en ce que** l'anneau de pression (4) repose avec une surface annulaire (431) d'un anneau à décrochement (43) s'étendant radialement vers l'intérieur sur un décrochement (74) de l'élément de fixation (7).

10. Appareil de mesure selon la revendication 1 ou la revendication 3, **caractérisé en ce que** l'anneau de pression (4, 8) ne peut être séparé du manchon (2) qu'en effectuant au moins un tour autour de son axe longitudinal.

11. Appareil de mesure selon la revendication 9, **caractérisé en ce que** l'anneau de pression (4) est vissé dans le manchon (2).

12. Appareil de mesure selon la revendication 9, **caractérisé en ce que**
- l'anneau de pression (8) est fixé sur le manchon (2) à l'aide d'au moins une vis (9) disposée parallèlement à l'axe longitudinal de l'anneau de pression (8), et
- dans l'anneau de pression (8) est disposée au moins une paire d'alésages,
- qui présente un premier alésage (862) et un deuxième alésage (863),
- moyennant quoi le premier alésage (862) a un diamètre intérieur qui est inférieur au diamètre maximal de la vis,
- moyennant quoi le deuxième alésage (863) a un diamètre intérieur qui est supérieur au diamètre maximal de la vis, et
- moyennant quoi le premier alésage (862) et le deuxième alésage (863) sont raccordés l'un à l'autre par l'intermédiaire d'un canal (864),
- dont la largeur est inférieure au diamètre maximal de la vis.

13. Appareil de mesure selon la revendication 11, **caractérisé en ce que** le premier alésage (862) présente à son extrémité opposée au manchon chaque fois une section (8621) dans laquelle est encastrée une section tournée vers l'anneau de pression d'une tête de vis des vis (9) et **en ce que** les vis (9) ne peuvent pas être complètement dégagées du manchon (2).

14. Appareil de mesure selon la revendication 5, **caractérisé en ce qu'**il est prévu un premier dispositif d'enclenchement permettant de soulever l'élément de fixation (7, 8) dans le manchon (2) et/ou de dégager l'élément de fixation (7, 8) du manchon (2) dans le sens opposé au joint d'étanchéité seulement dans au moins une position déterminée obtenue par la rotation de l'élément de fixation (7, 8) autour de son axe longitudinal (7, 8).

15. Appareil de mesure selon la revendication 14, **caractérisé en ce que** le premier dispositif d'enclenchement est constitué par :
- au moins un ergot d'arrêt (25) disposé dans le manchon (2),
- un épaulement (75) périphérique formé au niveau de l'élément de fixation (7),
- qui présente au moins un évidement (76).

16. Appareil de mesure selon la revendication 14, **caractérisé en ce que** le premier dispositif d'enclenchement est formé par :
- au moins un ergot d'arrêt (27) disposé dans le manchon (2),
- au moins une rainure de guidage (87) ménagée dans l'élément de fixation (8),
- dans laquelle doit être poussé l'ergot d'arrêt (27) lors du montage de l'élément de fixation (8), moyennant quoi l'élément de fixation (8) fait un tour autour de son axe longitudinal.

17. Appareil de mesure selon la revendication 16, **caractérisé en ce que** :
- la rainure de guidage (87) présente au moins un alésage borgne (874, 875),
- qui s'étend parallèlement à l'axe longitudinal de l'élément de fixation (8).

18. Appareil de mesure selon la revendication 3, **caractérisé en ce qu'**une pression régnant à l'emplacement de la mesure s'exerce sur l'élément de fixation (7, 8) lorsqu'on retire l'anneau de pression (4, 8) et le déplace dans la direction axiale jusqu'à ce que l'élément de fixation (7, 8) s'engrène dans un premier dispositif d'enclenchement.

19. Appareil de mesure selon la revendication 18, **caractérisé en ce que** l'élément de fixation (7, 8) ne peut pas tourner à l'état enclenché et
est raccordé à l'anneau de pression (4, 8) de manière fixe ou par l'intermédiaire d'un deuxième dispositif d'enclenchement, de telle sorte qu'une rotation de l'anneau de pression (4, 8) ne soit possible qu'avec une rotation de l'élément de fixation (7, 8), et **en ce que**
- l'anneau de pression (4, 8) ne peut être retiré qu'avec la rotation du manchon (2).

20. Appareil de mesure selon la revendication 19, **caractérisé en ce que** le deuxième dispositif d'enclenchement présente un taquet d'enclenchement (44) pouvant être encastré par l'intermédiaire de l'action d'une force axiale, disposé sur une surface annulaire (431) tournée vers l'élément de fixation de l'anneau de pression (4) et un nombre correspondant de crans (77) disposés dans l'élément de fixation (7) au niveau de son extrémité tournée vers l'anneau de pression.
